# EUROPÄISCHE PATENTANMELDUNG

(11) **EP 2 236 632 A2**
(43) Veröffentlichungstag der Anmeldung: **06.10.2010**
(21) Anmeldenummer: 10003271.3
(22) Anmeldetag: 26.03.2010
(51) Int. Cl.: C21D 11/00

(54) **Verfahren und Computer-Programm zur Steuerung der Wärmebehandlung von metallischen Werkstücken**

(30) Priorität: 03.04.2009 DE 102009016138
(71) Anmelder: Ipsen International GmbH, 47533 Kleve (DE)
(72) Erfinder: Eversmann, Thomas, 46284 Dorsten (DE); Mühlhaus, Thomas, 46446 Emmerich am Rhein (DE); Biester, Frank, 47533 Kleve (DE); Wolff, Regina, 47546 Kalkar (DE); Willeke, Jörg, 40724 Hilden (DE); Schulte, Werner, 46569 Hünxe (DE)

(57) **Zusammenfassung**

Ein Verfahren und Computer-Programm zur Steuerung der Wärmebehandlung von Chargen metallischer Werkstücke für eine Erhöhung des Automatisierungsgrades von Industrieofen-Anlagen setzt einen gleichen Chargenaufbau, ein gleiches Behandlungsprogramm und eine gleiche Artikelgeometrie von metallischen Werkstücken voraus und bezieht sich auf eine Mustercharge (4), die mit Chargenthermoelementen (3) gefahren worden ist. Die Mustercharge (4) wird Grundlage für eine neue Charge (4). Durch eine Übernahme von Programmparametern des tatsächlich gefahrenen Prozesses der Mustercharge (4) in das Programm der neu zu fahrenden Charge werden neue Chargenthermoelemente (3) für die neu zu fahrende Charge (4) nicht erforderlich.

## Beschreibung

### Technisches Gebiet

Die Erfindung betrifft ein Verfahren und Computer-Programm zur Steuerung der Wärmebehandlung von metallischen Werkstücken für Industrieofen-Anlagen, um Voraussetzungen für Erhöhung des Automatisierungsgrades der Beladung von Öfen zu schaffen.

### Stand der Technik

Zur optimalen technologischen Vorbereitung der durchzuführenden Wärmebehandlung von metallischen Werkstücken in Chargen für Industrieofen-Anlagen sind Verfahren bekannt, die die Abläufe rationalisieren sollen. Dabei werden so genannte Chargenthermoelemente verwendet, die eine vollständige Durchwärmung einer Charge durch Vergleich der Chargentemperatur außen/innen sicherstellen. In diesem Teilprozeß wird die Programmsegmentdauer dabei solange dynamisch verlängert, bis beide gemessenen Temperaturen gleich sind. Unter Programmsegmentdauer definiert der Fachmann die Zeiten für die Wärmebehandlung des Werkstücks in dem jeweiligen Behandlungsabschnitt, wobei diese Programmsegmentdauer ein Teil von Werten für technologische Wärmebehandlungsrezepturen darstellen.

Das Anbringen besagter Chargenthermoelemente erfolgt manuell bei jeder neuen Charge und behindert einen kontinuierlich angestrebten wie automatisierten Ablauf der Wärmebehandlung.

Die EP 0 556 176 B2 (DE 691 04 377 T3) offenbart ein spezielles Steuersystem zur Planung der Werkstückbehandlung in einem Wärmebehandlungsverfahren für eine Vielzahl von verbundenen Kammern einer Industrieofen-Anlage. Die Bearbeitungskammern bearbeiten mindestens zwei Teile simultan oder gleichzeitig mit einzigartigen Bearbeitungszeiten. Dieses Steuersystem besitzt auch Speichermittel zum Aufzeichnen je Teil spezifischer Bearbeitungszeiten. Das Verfahren lehrt lediglich allgemein eine Zeitplanung in einer kontinuierlichen Ofenstruktur mit den Schritten zum Speichern und Aufzeichnen der Funktionen des Steuersystems, jedoch nicht in Verbindung mit Chargenthermoelementen, die eine vollständige Durchwärmung einer Charge durch Vergleich der Chargentemperatur außen/innen sicherstellen sollen.

Es wurde bereits intern nach einem Verfahren und Computer-Programm zum automatischen Erstellen von technologischen Rezepten für die Wärmebehandlung von metallischen Werkstücken in Industrieöfen gesucht. Durch eine programmgesteuerte Bestimmung sollte ermöglicht werden, dass die Durchführung von Wärmebehandlungen metallischer Werkstücke in Industrieöfen vor dem Beginn der Wärmebehandlung im jeweiligen Industrieofen besser planbar wird. Es war Ziel, den Automatisierungsgrad zu erhöhen.

Dazu wurde gemäß PCT/DE 2008/001454 vorgeschlagen, in einem Verfahren und Computer-Programm mittels
- Werte für einen Werkstoff eines jeweiligen Werkstücks, Angaben zu Wärmebehandlungsverfahren und von technischen Angaben des jeweiligen Industrieofens,
- einer stufenweisen Vorgabe oder Generierung von vorkalkulierbaren Parametern für die Wärmebehandlung des Werkstücks und
- eines ein Wärmebehandlungsprogramm generierenden Computers mit Datenbanken und einer programmgemäßen Speicherung eines generierten Wärmebehandlungsprogramms sowie den Abruf zur Aktivierung der Wärmebehandlung im Industrieofen
   1. in einem ersten Programmschritt eine Werkstoffgruppe und den Werkstoff auszuwählen und in Abhängigkeit vom ausgewählten Werkstoff ein Wärmebehandlungsverfahren zu bestimmen,
   2. in einem zweiten Programmschritt Daten des Werkstücks/der Charge, wie
      - eine Wandstärke einzugeben,
      - eine Vergleichsgeometrie auszuwählen,
      - ein Chargengewicht einzugeben und
      - einen Chargenaufbau auszuwählen,
         um daraus automatisch eine virtuelle Wandstärke zu berechnen,
   3. in einem dritten Programmschritt aus der virtuellen Wandstärke zusammen mit den Daten der Charge und den verfügbaren Parametern des Industrieofens eine vom Werkstoff abhängige und ggf. manuell veränderbare Aufheiz- und Abschreckcharakteristik zu integrieren und
   4. in einem vierten Programmschritt zuerst
      ■ Daten von dem gewählten Material zu Behandlungsparametern und Daten von dem gewählten Wärmebehandlungsverfahren zu einer Rezeptstrukturvorlage zuladen und
      ■ aus der Rezeptstrukturvorlage unter Verwendung der Daten aus einer Benutzerschnittstelle, wie
         ○ Aufheizcharakteristik und
         ○ Abschreckcharakteristik
            sowie erforderlichenfalls
         ○ eine Sollhärte
            zu einer Rezeptstruktur zusammenzustellen, woraus
      ■ Werte von Rezeptursegmenten, wie
         ○ Segmentdauern, auf die in der weiteren Darstellung der Erfindung noch eingegangen wird,
         ○ Temperaturen,
         ○ Rampensteigungen und/oder Temperaturrampen und
         ○ Drücke festzulegen und dann im Ergebnis des vierten Programmschritts ein technologisches Wärmebehandlungsrezept automatisch zu generieren, welches nacharbeitbar, in einer Programmdatenbank speicherbar sowie für die Wärmebehandlung von metallischen Werkstücken zum Industrieofen abrufbar ist.

Das Verfahren und Programm kann in einem fünften Programmschritt ausgebaut werden, indem eine Übertragung des Wärmebehandlungsrezeptes an den Ofen erfolgt. Dazu wird für die im Industrieofen autonom ablaufende Wärmebehandlung des Werkstücks/der Charge das Wärmebehandlungsprogramm aus der Programmdatenbank abgerufen und zur Wärmebehandlung im Industrieofen vermittelt.

In dieser Programmdatenbank werden demnach schon Wärmebehandlungsprogramme erstellt und in der Programmdatenbank abgelegt.

Die in dieser Programmdatenbank enthaltenen Wärmebehandlungsverfahren/- programmabläufe können im Hinblick auf die erforderliche Installation und Funktion besagter Chargenthermoelemente rationeller angewendet werden.

Die Installation der Chargenthermoelemente und der daraus resultierende Vergleich der Chargentemperatur außen/innen ist als Teilprozeß allgemein bei gattungsgemäßen Wärmehandlungsverfahren ein erheblicher Aufwand, da die Programmsegmentdauer solange dynamisch verlängert werden muß, bis beide gemessenen Temperaturen gleich sind.

### Darstellung der Erfindung

### Aufgabe

Die Erfindung stellt sich die Aufgabe, ein Verfahren und Computer-Programm zur Steuerung der Wärmebehandlung von metallischen Werkstücken in Industrieofen-Anlagen mit einem erhöhten Automatisierungsgrad der Beladung des Ofens zu entwickeln, welches die Schritte
- Generierung einer neuen Charge,
- Zuordnung eines Wärmebehandlungsprogramms zu dieser Charge,
- manuelles Anbringen von Chargenthermoelementen an dieser Charge,
- Senden der Wärmebehandlungsprogramms an eine SPS eines Ofens,
- Transport der Charge in den Ofen,
- Starten und Durchführung eines Wärmebehandlungszyklus und
- Entladen der Charge aus dem Ofen
   aufweist, wobei die Installation und Funktionen der Chargenthermoelemente rationalisiert und damit Zeiten verkürzt werden.

### Lösung

Die Erfindung geht davon aus, sich auf eine Mustercharge zu beziehen, die mit Chargenthermoelementen gefahren worden ist. Dabei war zu analysieren, daß ein gleicher Chargenaufbau ein gleiches Behandlungsprogramm und eine gleiche Artikelgeometrie von metallischen Werkstücken voraussetzt. Die bei der Mustercharge ermittelten Segmentlaufzeiten werden als Grundlage für die neue Charge verwendet, so dass die entsprechenden Segmente die gleichen Laufzeiten haben, die bei der Mustercharge durch Zuhilfenahme der Chargenthermoelemente ermittelt worden sind.

Ausgehend von dieser Analyse erkannte die Erfindung eine mögliche Übernahme von Programmparametern des tatsächlich gefahrenen Prozesses der Mustercharge in das Programm der neu zu fahrenden Charge, so daß neue Chargenthermoelemente für die neu zu fahrende Charge nicht erforderlich werden.

Nach dieser erfindungsgemäßen Erkenntnis wird so vorgegangen, daß eine Mustercharge erstellt und dazu ein Programm verwendet wird. So wird schon bei der Erstellung einer Charge in einer Vorlaufliste eine Option "als Mustercharge definieren" anwählbar. Im Chargenarchiv wird dann eine solche Charge später direkt über einen Code (Chargen-ID) aus einer Übersichtliste der Musterchargen selektierbar.

Die Erfindung mußte zwei Problemkreise lösen, die in dem jeweiligen Programm zu einem einheitlichen und überraschenden Effekt gemäß der Aufgabenstellung ineinander funktionell verschmelzen:

### 1. Das Fahren der Mustercharge

Zum Fahren der Mustercharge mit Chargenthermoelementen wird der Mustercharge ein bestimmtes Behandlungsprogramm zugeordnet. Zweckmäßig kann auch ein Foto des Chargenaufbaus zugeordnet werden. Behandlungsprogramm sowie Chargenaufbau sind konstante Parameter für alle Chargen, die später diese Mustercharge verwenden werden. Nach Abschluss der Wärmebehandlung der Mustercharge ist deren Prozessverlauf im Archiv verfügbar und es wird automatisch ein modifiziertes Musterchargenprogramm auf Basis des ursprünglichen Programms generiert. Dabei wird die Segmentdauer der einzelnen Segmente durch die tatsächlich ermittelte Dauer ersetzt und die weitere Verwendung von Chargenthermoelementen deaktiviert.

### 2. Das Verwenden der Mustercharge aus der Auswahlliste

Später zu fahrende Chargen können sich auf eine bereits vorhandene Mustercharge beziehen. Die Musterchargen werden in einer Auswahlliste angeboten, wobei zunächst ein gleiches Behandlungsprogramm vorausgesetzt wird. Bei einer solchen Zuordnung der Charge zu einer Mustercharge wird anstelle des ursprünglichen Behandlungsprogramms automatisch das modifizierte Programm der Mustercharge zugeordnet, das die tatsächlich gefahrenen Zeiten der Mustercharge als Segmentdauer verwendet. Auf weitere Chargenthermoelemente kann somit verzichtet werden. Nach Senden des Behandlungsprogramms an die SPS (speicherprogrammierbare Steuerung) durchläuft die neue Charge den gleichen Zyklus wie die zugeordnete Mustercharge. Vorausgesetzt, daß Gleicher Chargenaufbau, gleiches Chargengewicht sowie gleiche Artikelgeometrie vorliegen, wird ein gleiches Wärmebehandlungsergebnis erwartet.

Durch die Anwendung des erfindungsgemäßen Programms kommt der Betreiber einer Industrieofen-Anlage nun ohne weitere Chargenthermoelemente aus, wenn erfindungsgemäß auf eine Mustercharge Bezug genommen wird, die mit Chargenthermoelementen gefahren und dabei gleicher Chargenaufbau, gleiches Behandlungsprogramm und gleiche Artikelgeometrie vorauszusetzen sind. Die bei der Mustercharge ermittelten Segmentlaufzeiten werden als Grundlage für die neue Charge verwendet, so dass die entsprechenden Segmente die gleichen Laufzeiten haben, die bei der Mustercharge durch Zuhilfenahme der Chargenthermoelemente ermittelt worden sind.

Somit kann nach der Definition der Charge als Mustercharge automatisch ein modifiziertes Musterchargenprogramm auf Basis des ursprünglichen Programms generiert werden, wobei die Segmentdauer der einzelnen Segmente durch die tatsächlich ermittelte Dauer ersetzt und die Verwendung von Chargenthermoelementen deaktiviert wird.

Die Erfindung offenbart mit dem gefundenen Programmprinzip in überraschender Weise einen technisierten "Lernprozess" aus der Übernahme von Programmparametern des tatsächlich gefahrenen Prozesses der Mustercharge in das Programm der neu zu fahrenden Charge.

Darüber hinaus kann die Erfindung an einer Schnittstelle des eingangs benannten Programms gemäß der PCT/DE 2008/001454 kombiniert eingebunden werden, indem in jener Programmdatenbank das erfindungsgemäße Programm abgelegt wird. Diese in der erfindungsgemäßen Programmdatenbank enthaltenen Wärmebehandlungsprogramme können dann einer Mustercharge zugeordnet werden.

Nach Abschluss der Wärmebehandlung dieser Mustercharge wird automatisch ein zu dieser Mustercharge gehörendes Musterprogramm mit expliziten Programmsegmentdauern generiert, welches wiederum in der Programmdatenbank abgelegt wird.

Durch die kombinierte Anwendung besagten Programms gemäß der PCT/DE 2008/001454 und des erfindungsgemäßen wird die automatische Programmerstellung weiter optimiert: Jenes Programm ermöglicht schon die automatische Erstellung eines Wärmebehandlungsprogramms für einen vorgegebenen Werkstoff. Bei dem sind jedoch die Programmsegmentdauern teilweise nicht explizit vorgegeben, sondern von den im späteren Prozess über Chargenthermoelemente eingelesenen Prozesswerten abhängig. Durch die funktionell verschmelzende Verwendung mit dem erfindungsgemäßen Programm können nun diese Programmsegmentdauern nach der Wärmebehandlung der Mustercharge ermittelt und automatisch in das Wärmebehandlungsprogramm eingetragen werden.

Die Erfindung ist in den Ansprüchen 1 bis 9
- entsprechend den Arbeits- bzw. Programmschritten mit Varianten des Hauptgedankens,
- deren zweckmäßige Ausführungen mit Schnittstellen und
- den zu verwendenden Mitteln der Hard-und Software
dargestellt.

Das Verfahren und Computer-Programm zur Steuerung der Wärmebehandlung von metallischen Werkstücken für automatische Industrieofen-Anlagen umfasst zunächst die an sich bekannten Arbeitsschritte, wie
- Generierung einer neuen Charge,
- Zuordnung eines Wärmebehandlungsprogramms zu dieser Charge,
- manuelles Anbringen von Chargenthermoelementen an dieser Charge,
- Senden der Wärmebehandlungsprogramms an eine SPS eines Ofens,
- Transport der Charge in den Ofen,
- Starten und Durchführung eines Wärmebehandlungszyklus und
- Entladen der Charge aus dem Ofen.

Der Hauptgedanke der Erfindung ist mit den folgenden neuen Grundschritten eines Programms gemäß Anspruch 1 wie folgt festgelegt:
a) Die Zuordnung eines Wärmebehandlungsprogramms zur Charge wird ausschließlich bei der ersten Charge von folgenden durchgeführt,
b) Chargenthermoelemente werden an dieser Charge ausschließlich bei der ersten Charge von folgenden angebracht und
c) nach Generierung einer neuen Charge wird in folgenden Chargen
   - in einem neuen Arbeitsschritt eine Auswahl der Mustercharge getroffen, deren Wärmebehandlungsprogramm verwendet werden soll, und
   - sodann in einem neuen Programmschritt das zu der ausgewählten Mustercharge gehörende Musterprogramm zu der Charge automatisch zugeordnet.

Es können für einen kompletten Programmablauf
entsprechend Anspruch 2
   nach dem Schritt der Zuordnung eines Wärmebehandlungsprogramms zur Charge diese in einem weiteren neuen Schritt als Mustercharge ausschließlich bei der ersten Charge von folgenden definiert werden
und entsprechend Anspruch 3
   nach dem Schritt der Durchführung des Wärmebehandlungszyklus in einem wiederum neuen Schritt automatisch ein zu dieser Mustercharge gehörendes Musterprogramm mit expliziten Programmsegmentdauern ausschließlich bei der ersten Charge von folgenden generiert werden, so daß
diese beiden Verknüpfungen zusammen mit dem obigen Hauptgedanken der Erfindung eine erste Programmvariante der Erfindung bilden.

Neben vorstehender Variante kann eine komplette zweite Programmvariante ausgeführt werden, indem zusammen mit besagtem Hauptgedanken der Erfindung
Anspruch 4,
   daß nach dem Schritt des Entladens der Charge aus dem Ofen diese Charge in einem ebenfalls neuen Schritt als Mustercharge ausschließlich bei der ersten Charge von folgenden definiert wird,
und Anspruch 5,
   daß nach dem Schritt der Definition der Charge als Mustercharge in einem darüber hinaus neuen Schritt automatisch ein zu dieser Mustercharge gehörendes Musterprogramm mit expliziten Programmsegmentdauern ausschließlich bei der ersten Charge von folgenden generiert wird,
   verknüpft werden.

Auf dieser Basis ermöglicht die Erfindung darüber hinaus an einer Schnittstelle des Programms gemäß der bereits zitierten PCT/DE 2008/001454 eine kombinierte Einbindung gemäß Anspruch 6, und zwar wie folgt:
Jenes Programm zum automatischen Erstellen von technologischen Rezepten zur Wärmebehandlung von metallischen Werkstücken in einem Ofen mittels
   - Werte für einen Werkstoff eines jeweiligen Werkstücks, Angaben zu Wärmebehandlungsverfahren und von technischen Angaben des jeweiligen Ofens,
   - einer stufenweisen Vorgabe oder Generierung von vorkalkulierbaren Parametern für die Wärmebehandlung des Werkstücks und
   - eines ein Wärmebehandlungsprogramm generierenden Computers mit Datenbanken und einer programmgemäßen Speicherung eines generierten Wärmebehandlungsprogramms sowie den Abruf zur Aktivierung der Wärmebehandlung im Ofen
weist schon die folgenden Schritte auf:
   a) In einem ersten Programmschritt wird eine Werkstoffgruppe und der Werkstoff ausgewählt und in Abhängigkeit vom ausgewählten Werkstoff ein Wärmebehandlungsverfahren bestimmt,
   b) in einem zweiten Programmschritt werden Daten des Werkstücks Charge wie eine Wandstärke eingegeben, eine Vergleichsgeometrie ausgewählt, ein Chargengewicht eingegeben und ein Chargenaufbau ausgewählt und daraus automatisch eine virtuelle Wandstärke berechnet,
   c) in einem dritten Programmschritt werden aus der virtuellen Wandstärke zusammen mit den Daten der Charge und den verfügbaren Parametern des Ofens eine vom Werkstoff abhängige und ggf. manuell veränderbare Aufheiz- und Abschreckcharakteristik integriert und
   d) in einem vierten Programmschritt werden zuerst Daten von dem gewählten Material zu Behandlungsparametern und Daten von dem gewählten Wärmebehandlungsverfahren zu einer Rezeptstrukturvorlage geladen und aus der Rezeptstrukturvorlage unter Verwendung der Daten aus einer Benutzerschnittstelle, wie Aufheizcharakteristik und Abschreckcharakteristik sowie erforderlichenfalls eine Sollhärte zu einer Rezeptstruktur zusammengestellt, woraus Werte von Rezeptursegmenten, wie Segmentdauern, Temperaturen, Rampensteigungen und/oder Temperaturrampen und Drücke festgelegt werden und dann im Ergebnis des vierten Programmschritts ein technologisches Wärmebehandlungsrezept automatisch generiert wird, welches nacharbeitbar, in einer Programmdatenbank speicherbar sowie für die Wärmebehandlung von metallischen Werkstücken zum Industrieofen abrufbar ist.
Im Hinblick einer Schnittstelle zur vorliegenden Erfindung werden nun
   e) in der Programmdatenbank in dem üblichen Arbeitsschritt der "Zuordnung eines Wärmebehandlungsprogramms zur Charge" das Wärmebehandlungsprogramm ausgewählt, das der Charge zugeordnet wird, die dann in einem Arbeitsschritt als Mustercharge definiert wird, und
   f) nach Abschluss der Wärmebehandlung dieser Mustercharge automatisch ein zu dieser Mustercharge gehörendes Musterprogramm mit expliziten Programmsegmentdauern generiert, welches wiederum in der Programmdatenbank abgelegt wird.

Die Programmvarianten zur Steuerung der Wärmebehandlung können so ausgeführt werden, daß bei einer zweckmäßigen Erstellung der Charge aus einem Chargenarchiv eine Mustercharge später direkt über einen Code (Chargen-ID) aus einer Musterliste der Musterchargen selektiert wird.

Vorteilhaft ist es, die Erfindung entsprechend den Ansprüchen 7 bis 9 dadurch zu einer komfortablen Programmbedienung auszubilden, indem mit der Verwendung entsprechender Benutzeroberflächen für die Programmführung
- zur Erstellung der Mustercharge die Option "als Mustercharge definieren" als 1. Programmvariante angewählt wird oder
- zur Erstellung der Mustercharge die Option "Mustercharge" angewählt wird, um die Charge als Mustercharge als 2. Programmvariante zu definieren und
- mittels der aus der Auswahlliste für später zu fahrende Chargen auf eine bereits eingegebene Mustercharge zurückgegriffen wird und bei einer solchen Zuordnung der Charge zu einer Mustercharge anstelle des ursprünglichen Behandlungsprogramms automatisch das modifizierte Programm der Mustercharge zugeordnet wird, das die tatsächlich gefahrenen Zeiten der Mustercharge als Segmentdauer verwendet, wobei dann nach Senden des Behandlungsprogramms an die SPS die neue Charge den gleichen Zyklus wie die zugeordnete Mustercharge durchläuft.

Die Erfindung wird nachstehend an Hand der Zeichnungen mit Ausführungsbeispielen in Programmvarianten und zweckmäßigen Anwendungen näher beschrieben.

### Kurze Beschreibung der Zeichnungen

In den Zeichnungen zeigen
**Fig. 1** ein Ablaufdiagramm von Arbeitsschritten nach dem Stand der Technik,
**Fig. 2** ein Ablaufdiagramm einer erfindungsgemäßen ersten Programmvariante,
**Fig. 3** ein Ablaufdiagramm einer erfindungsgemäßen zweiten Programmvariante,
**Fig. 4a****)** eine der 1. Programmvariante entsprechende programmgemäße Benutzeroberfläche mit der anwählbaren Option "als Mustercharge definieren",
**Fig. 4b****)** eine der 2. Programmvariante entsprechende programmgemäße Benutzeroberfläche mit der anwählbaren Option "Mustercharge",
**Fig. 5** die programmgemäße Benutzeroberfläche mit der anwählbaren Option "Mustercharge verwenden" als Rückgriff auf eine bereits verwendete Mustercharge und
**Fig. 6** das Schema einer erfindungsgemäßen Anwendung in einem Ofen 1 in Verbindung mit dem Programm zur Steuerung der Wärmebehandlung von Chargen 4, 6.

### Bester Weg zur Ausführung der Erfindung

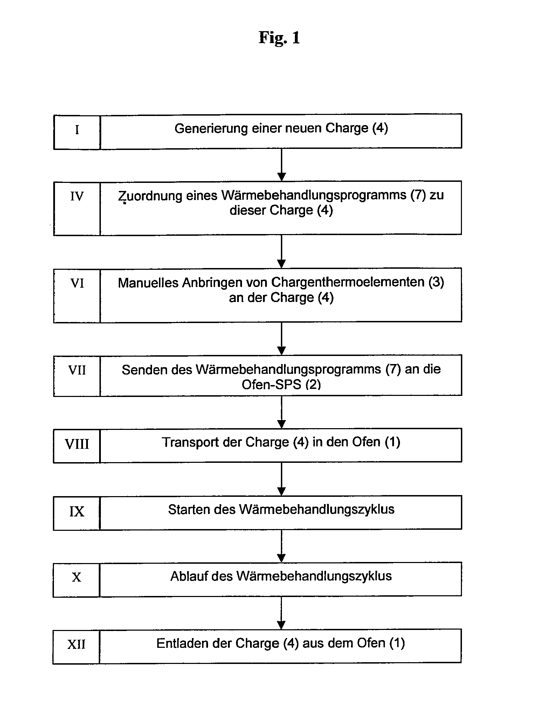

Gemäß Fig. 1 ist entsprechend dem intern bekannten Stand der Technik der bisherige Ablauf einer Steuerung der Wärmebehandlung dargestellt, welcher folgende Schritte umfasst:
- I die Generierung einer neuen Charge 4,
- IV die Zuordnung eines Wärmebehandlungsprogramms 7 zu dieser Charge 4,
- VI das manuelle Anbringen von Chargenthermoelementen 3 an dieser Charge 4,
- VII das Senden des Wärmebehandlungsprogramms 7 an eine SPS 2 eines Ofens 1,
- VIII der Transport der Charge 4 in den Ofen 1,
- IX das Starten und X die Durchführung bzw. der Ablauf eines Wärmebehandlungszyklus und
- XII das Entladen der Charge 4 aus dem Ofen 1.

Der besseren Übersicht halber wurde die mit römischen Ziffern erfolgte Nummerierung dieser bekannten Arbeitsschritte mit der Nummerierung der Arbeitsschritte der Erfindung harmonisiert.

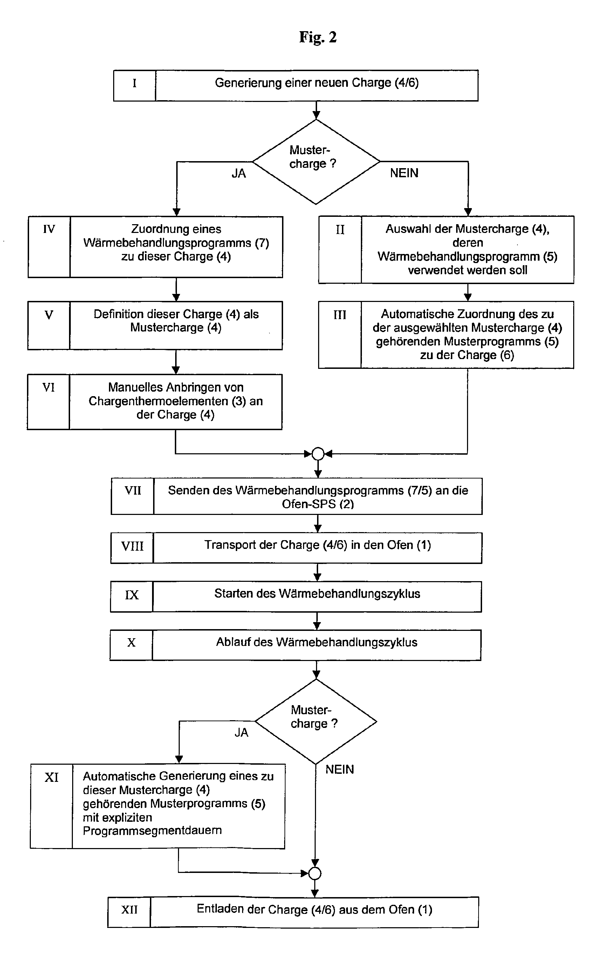

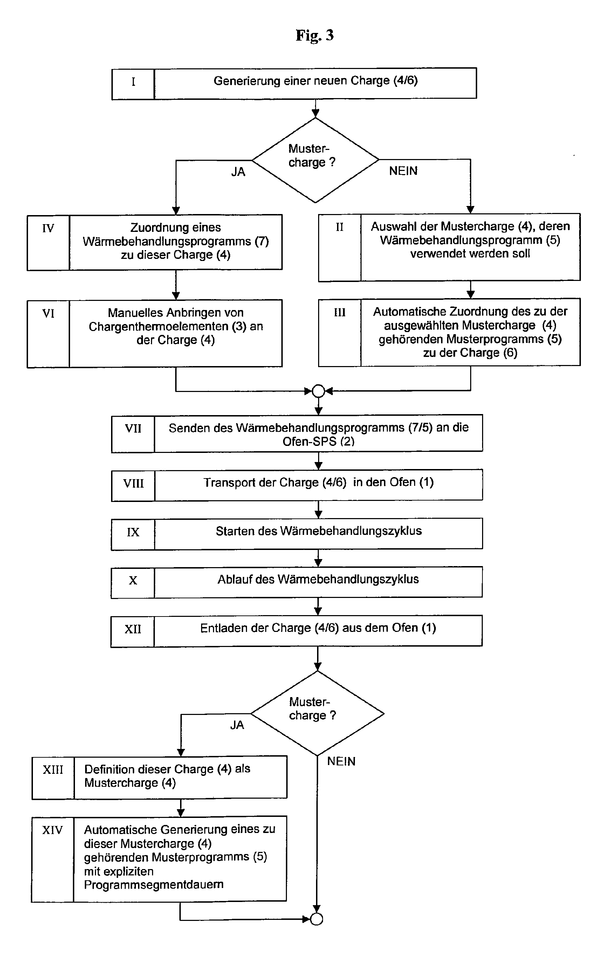

Der Fig. 2 und der Fig. 3 ist nun der für das erfindungsgemäße Verfahren und Computer-Programm zur Steuerung der Wärmebehandlung von metallischen Werkstücken für Industrieofen-Anlagen wesentliche Ablauf mit den Arbeitsschritten wie folgt zu entnehmen:
a) IV Zuordnen eines Wärmebehandlungsprogramms 7 zur Charge 4 ausschließlich bei der ersten Charge 4 von folgenden,
b) VI Anbringen von Chargenthermoelementen 3 an dieser Charge 4 ausschließlich bei der ersten Charge 4 von folgenden und
c) nach Generierung einer neuen Charge 4 in folgenden Chargen 4
   - in einem Arbeitsschritt II eine Auswahl der Mustercharge 4, deren Wärmebehandlungsprogramm verwendet werden soll und
   - sodann in einem Programmschritt III eine automatische Zuordnung des zu der ausgewählten Mustercharge 4 gehörenden Musterprogramms 5 zu der Charge 4.

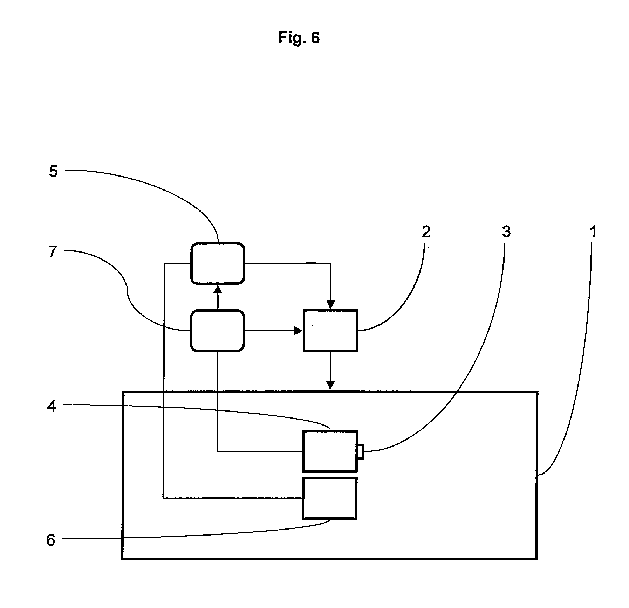

In der Fig. 6 sind im schematischen Zusammenhang mit dem erfindungsgemäßen Verfahren und Computerprogramm dargestellt:
- Ein automatisierbarer Ofen 1 zur Wärmebehandlung von metallischen Werkstücken mit einer SPS 2,
- Chargenthermoelemente 3, die an einer ersten Charge 4 als Mustercharge 4 von folgenden angebracht sind,
- ein Wärmebehandlungsprogramm als Musterprogramm 5,
- eine folgende Charge 6 nach Generierung einer Mustercharge 4,
- ein Wärmebehandlungsprogramm 7, welches als Computerprogramm mit einer herkömmlichen Hardware den Ofen 1 zur Wärmebehandlung der metallischen Werkstücke steuert.

Für die Praxis werden gemäß Fig. 2 und Fig. 3 zwei vorteilhafte Programmvarianten mit folgendem Ablauf nachstehend vorgestellt:

### Programm I (Fig. 2)

Nach dieser Variante besteht das erfindungsgemäße Verfahren und Computer-Programm zur Steuerung der Wärmebehandlung von Chargen 4, 6 mit metallischen Werkstücken im Ofen 1 aus den sich in einen Algorithmus nach Fig. 2 einordnenden Schrittfolgen in Folgendem:
- I die Generierung einer neuen Charge 4; 6,
- IV die Zuordnung eines Wärmebehandlungsprogramms 7 zur Charge 4 ausschließlich bei der ersten Charge 4 von folgenden,
- V Definition dieser Charge 4 als Mustercharge 4 ausschließlich bei der ersten Charge 4 von folgenden,
- VI das Anbringen von Chargenthermoelementen 3 an dieser Charge 4 ausschließlich bei der ersten Charge 4 von folgenden,
- XI die automatische Generierung eines zur Mustercharge 4 gehörenden Musterprogramms 5 mit expliziten Programmsegmentdauern ausschließlich bei der ersten Charge 4 von folgenden,
- in folgenden Chargen 6 nach Generierung einer neuen Charge 4
   - ein Arbeitsschritt II mit einer Auswahl der Mustercharge 4, deren Wärmebehandlungsprogramm 5 verwendet werden soll und
   - sodann ein Programmschritt III mit einer automatischen Zuordnung des zu der ausgewählten Mustercharge 4 gehörenden Musterprogramms 5 zu der Charge 6.

In Fig. 2 ist demnach die Erfindungsvariante dargestellt, bei der die Definition der Mustercharge 4 nach der Zuordnung des Wärmebehandlungsprogramms 7 zu dieser Charge 4 in einem Arbeitsschritt V erfolgt.

### Programm II (Fig. 3)

Gemäß dieser Variante beinhaltet das erfindungsgemäße Verfahren und Computer-Programm zur Steuerung der Wärmebehandlung von Chargen 4, 6 mit metallischen Werkstücken im Ofen 1 die folgenden sich in den Algorithmus nach Fig. 3 einordnenden Schrittfolgen:
- I die Generierung einer neuen Charge 4, 6,
- IV die Zuordnung eines Wärmebehandlungsprogramms 7 zur Charge 4 ,6 ausschließlich bei der ersten Charge 4 von folgenden Chargen 6,
- VI das Anbringen von Chargenthermoelementen 3 an dieser Charge 4 ausschließlich bei der ersten Charge 4 von folgenden Chargen 6,
- nach dem Entladen der Charge 4, 6 aus dem Ofen 1 gemäß Schritt XII folgt Schritt XIII mit Definition dieser Charge 4 als Mustercharge 4 ausschließlich bei der ersten Charge 4 von folgenden Chargen 6,
- XIV die automatische Generierung eines zur Mustercharge 4 gehörenden Musterprogramms 5 mit expliziten Programmsegmentdauern ausschließlich bei der ersten Charge 4 von folgenden Chargen 6,
- in folgenden Chargen 6 nach Generierung einer neuen Charge 4
   - ein Arbeitsschritt II mit einer Auswahl der Mustercharge 4, deren Wärmebehandlungsprogramm 5 verwendet werden soll und
   - sodann ein Programmschritt III mit einer automatischen Zuordnung des zu der ausgewählten Mustercharge 4 gehörenden Musterprogramms 5 zu der Charge 6.

Somit zeigt Fig. 3 die Erfindungsvariante, bei der die Definition der Mustercharge 4 nach dem Entladen der Charge 4 aus dem Ofen 1 in einem Programmschritt XIII erfolgt.

Damit unterscheiden sich die erfindungsgemäßen Varianten grundsätzlich durch den Zeitpunkt, zu dem die Charge 4 als Mustercharge 4 definiert wird, woraus sich je nach Charakteristik der Chargen und/oder Taktfolgen, die günstigste Programmvariante auswählen und fahren lässt.

Diese Programmvarianten lassen sich an einer Schnittstelle mit einem Verfahren und Computer-Programm zum automatischen Erstellen von technologischen Rezepten zur Wärmebehandlung von metallischen Werkstücken in dem Ofen 1 mittels
- Werte für einen Werkstoff eines jeweiligen Werkstücks, Angaben zu Wärmebehandlungsverfahren und von technischen Angaben des jeweiligen Ofens 1,
- einer stufenweisen Vorgabe oder Generierung von vorkalkulierbaren Parametern für die Wärmebehandlung des Werkstücks,
- eines ein Wärmebehandlungsprogramm generierenden Computers mit Datenbanken und einer programmgemäßen Speicherung eines generierten Wärmebehandlungsprogramms sowie den Abruf zur Aktivierung der Wärmebehandlung im Ofen 1, bei dem
   a) in einem ersten Programmschritt eine Werkstoffgruppe und der Werkstoff ausgewählt und in Abhängigkeit vom ausgewählten Werkstoff ein Wärmebehandlungsverfahren bestimmt wird,
   b) in einem zweiten Programmschritt Daten des Werkstücks Charge wie eine Wandstärke eingegeben, eine Vergleichsgeometrie ausgewählt, ein Chargengewicht eingegeben und ein Chargenaufbau ausgewählt werden und daraus automatisch eine virtuelle Wandstärke berechnet wird,
   c) in einem dritten Programmschritt aus der virtuellen Wandstärke zusammen mit den Daten der Charge und den verfügbaren Parametern des Ofens 1 eine vom Werkstoff abhängige und ggf. manuell veränderbare Aufheiz- und Abschreckcharakteristik integriert werden und
   d) in einem vierten Programmschritt zuerst Daten von dem gewählten Material zu Behandlungsparametern und Daten von dem gewählten Wärmebehandlungsverfahren zu einer Rezeptstrukturvorlage geladen werden und aus der Rezeptstrukturvorlage unter Verwendung der Daten aus einer Benutzerschnittstelle, wie Aufheizcharakteristik und Abschreckcharakteristik sowie erforderlichenfalls eine Sollhärte zu einer Rezeptstruktur zusammengestellt werden, woraus Werte von Rezeptursegmenten, wie Segmentdauern, Temperaturen, Rampensteigungen und/oder Temperaturrampen und Drücke festgelegt werden und dann im Ergebnis des vierten Programmschritts ein technologisches Wärmebehandlungsrezept automatisch generiert wird, welches nacharbeitbar, in einer Programmdatenbank speicherbar sowie für die Wärmebehandlung von metallischen Werkstücken zum Ofen 1 abrufbar ist,
   derart kombinieren, indem
   e) in der erfindungsgemäßen Programmdatenbank in dem Arbeitsschritt IV gemäß Fig. 2 und Fig. 3 ein Wärmebehandlungsprogramm 7 ausgewählt wird, das einer Charge 4 zugeordnet wird, die dann in dem Arbeitsschritt V gemäß Fig. 2 oder Arbeitsschritt XIII gemäß Fig. 3 als Mustercharge 4 definiert wird, und
   f) nach Abschluss der Wärmebehandlung dieser Mustercharge 4 automatisch ein zu dieser Mustercharge 4 gehörendes Musterprogramm 5 mit expliziten Programmsegmentdauern generiert wird, welches wiederum in der besagten Programmdatenbank abgelegt wird.

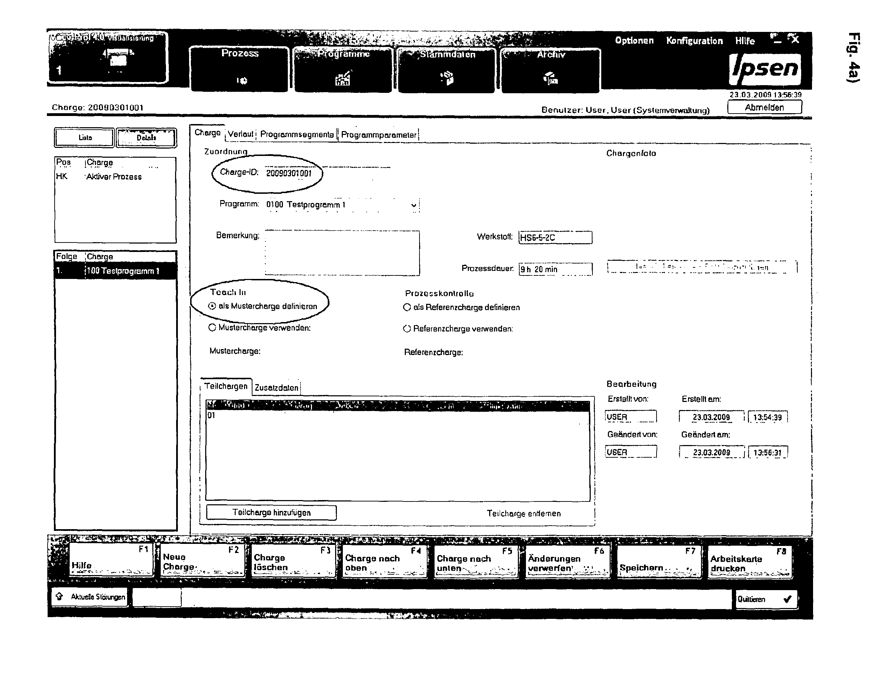

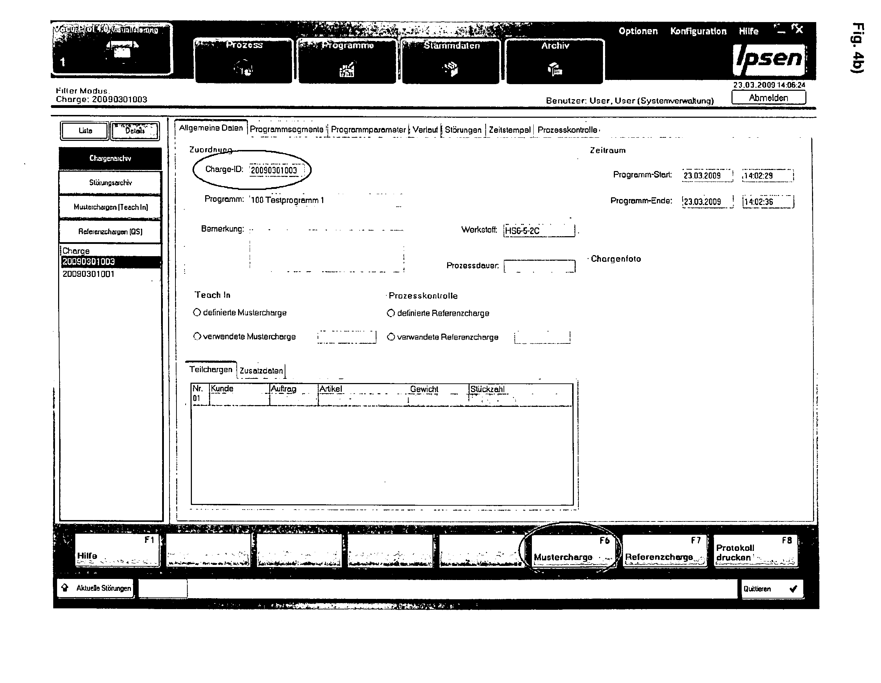

Das jeweilige erfindungsgemäße Computer-Programm ist komfortabel bedienbar, wenn eine Benutzeroberfläche verwendet wird, in der gemäß Fig. 4a zur Erstellung der Mustercharge 4 die markierte Option "als Mustercharge definieren" angewählt wird und/oder in der gemäß Fig. 4b die markierte Option "Mustercharge" angewählt wird, um die Charge 4 als Mustercharge 4 zu definieren.

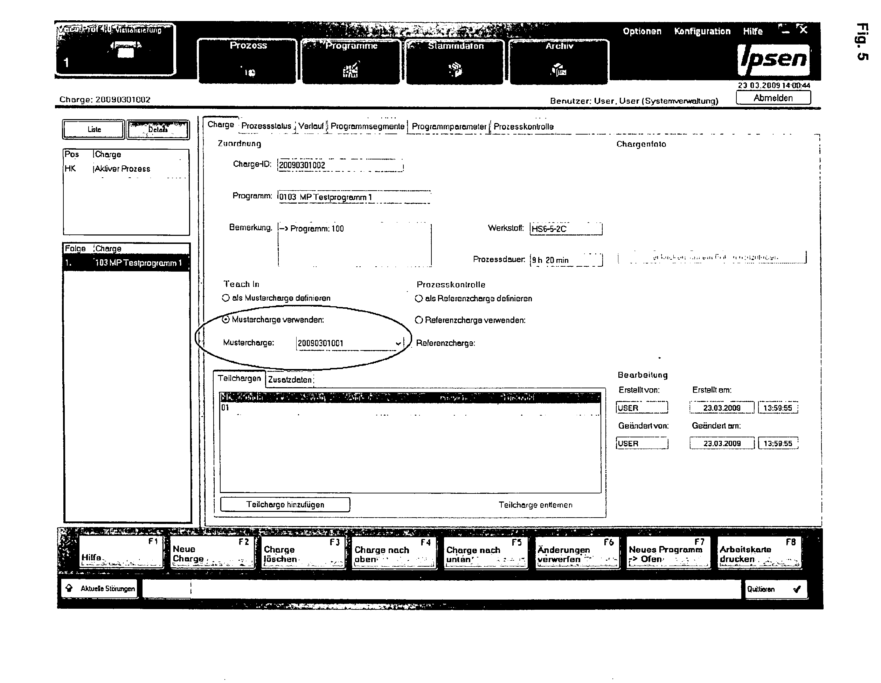

Schließlich wird die komfortable Bedienung des Computer-Programms weiter ausgebaut, wenn gemäß Fig. 5 in der Benutzeroberfläche mittels der aus der Auswahlliste für später zu fahrende Chargen 6 auf eine bereits eingegebene Mustercharge 4 zurückgegriffen werden soll. Bei einer solchen Zuordnung der Charge 6 zu einer Mustercharge 4 wird anstelle des ursprünglichen Behandlungsprogramms wie Wärmebehandlungsprogramm 7 automatisch dann das modifizierte Programm wie Musterprogramm 5 der Mustercharge 4 zugeordnet. Dieses verwendet die tatsächlich gefahrenen Zeiten der Mustercharge 4 als Segmentdauer. Nach Senden des Behandlungsprogramms an die SPS 2 entsprechend Schritt VII gemäß Fig. 2 und Fig. 3 durchläuft die neue Charge 6 den gleichen Zyklus wie die zugeordnete Mustercharge 4.

### Gewerbliche Anwendbarkeit

Die Erfindung hat sich im innerbetrieblichen Erprobungsdurchlauf bewährt. Dadurch, daß das manuelle Anbringen von Chargenthermoelementen an der Charge nur bei der ersten Charge, nicht aber bei den nachfolgenden Chargen erforderlich ist, wird ein schon automatisierter Betrieb insbesondere hinsichtlich der Beladung von Öfen 1 in seinem Automatisierungsgrad weiter erhöht. Dem Betreiber von Anlagen mit Industrieöfen gewährleistet dies deren höhere Verfügbarkeit. Bereits betriebene Industrieofenanlagen lassen sich ohne weiteres erfindungsgemäß nachrüsten.

### Bezugszeichenliste

1 Ofen
2 SPS
3 Chargenthermoelemente
4 Mustercharge, erste Charge von folgenden
5 Wärmebehandlungsprogramm als Musterprogramm
6 Charge, folgende Charge nach Generierung einer Mustercharge 4
7 Wärmebehandlungsprogramm

### Arbeits-/Programmschritte

I Generierung einer neuen Charge 4, 6
II Auswahl der Mustercharge 4, deren Wärmebehandlungsprogramm 7 verwendet werden soll
III automatische Zuordnung des zu einer ausgewählten Mustercharge 4 gehörenden Musterprogramm 5
IV Zuordnung eines Wärmebehandlungsprogramms 7 zur Charge 4
V Definition der Mustercharge 4 gemäß Fig. 2
VI manuelles Anbringen von Chargenthermoelementen 3 an der Charge 4
VII Senden des Wärmebehandlungsprogramms an eine SPS 2 eines Ofens 1
VIII Transport der Charge 4/6 in den Ofen 1
IX Starten und
X Durchführung eines Wärmebehandlungszyklus
XI automatische Generierung eines Musterprogramms 5 gemäß Fig. 2
XII Entladen der Charge 4/6 aus dem Ofen 1
XIII Definition der Mustercharge 4 gemäß Fig. 3
XIV automatische Generierung eines Musterprogramms 5 gemäß Fig. 3

## Patentansprüche

1. Verfahren und Computer-Programm zur Steuerung der Wärmebehandlung von metallischen Werkstücken für automatische Industrieofen-Anlagen mit den Arbeitsschritten
- (I) Generierung einer neuen Charge (4),
- (IV) Zuordnung eines Wärmebehandlungsprogramms (7) zu dieser Charge (4),
- (VI) manuelles Anbringen von Chargenthermoelementen (3) an dieser Charge (4),
- (VII) Senden des Wärmebehandlungsprogramms (7) an eine SPS (2) eines Ofens (1),
- (VIII) Transport der Charge (4) in den Ofen (1),
- (IX) Starten und (X) Durchführung eines Wärmebehandlungszyklus und
- (XII) Entladen der Charge (4) aus dem Ofen (1),
**aufweisend die Schritte**
a) (IV) Zuordnen eines Wärmebehandlungsprogramms (7) zur Charge (4) ausschließlich bei der ersten Charge (4) von folgenden,
b) (VI) Anbringen von Chargenthermoelementen (3) an dieser Charge (4) ausschließlich bei der ersten Charge (4) von folgenden und
c) (I) nach Generierung einer neuen Charge (4) in folgenden Chargen (6)
• einen Arbeitsschritt (II) mit einer Auswahl der Mustercharge (4), deren Wärmebehandlungsprogramm (5) verwendet werden soll und
• sodann einen Programmschritt (III) mit einer automatischen Zuordnung des zu der ausgewählten Mustercharge (4) gehörenden Musterprogramms (5) zu der Charge (6).

2. Verfahren und Computer-Programm nach Anspruch 1, **dadurch gekennzeichnet, dass** nach dem Schritt (IV) der Zuordnung eines Wärmebehandlungsprogramms (7) zur Charge (4) diese in einem Schritt (V) als Mustercharge (4) ausschließlich bei der ersten Charge (4) von folgenden definiert wird.

3. Verfahren und Computer-Programm nach Anspruch 1 und 2, **dadurch gekennzeichnet, dass** nach dem Schritt (X) der Durchführung des Wärmebehandlungszyklus in einem Schritt (XI) automatisch ein zu dieser Mustercharge (4) gehörendes Musterprogramm (5) mit expliziten Programmsegmentdauern ausschließlich bei der ersten Charge (4) von folgenden generiert wird.

4. Verfahren und Computer-Programm nach Anspruch 1, **dadurch gekennzeichnet, dass** nach dem Schritt (XII) des Entladens der Charge (4) aus dem Ofen (1) diese Charge (4) in einem Schritt (XIII) als Mustercharge (4) ausschließlich bei der ersten Charge (4) von folgenden definiert wird.

5. Verfahren und Computer-Programm nach Anspruch 1 und 4, **dadurch gekennzeichnet, dass** nach dem Schritt (XIII) der Definition der Charge (4) als Mustercharge (4) in einem Schritt (XIV) automatisch ein zu dieser Mustercharge (4) gehörendes Musterprogramm (5) mit expliziten Programmsegmentdauern ausschließlich bei der ersten Charge (4) von folgenden generiert wird.

6. Verfahren und Computer-Programm nach einem der Ansprüche 1 bis 5, **gekennzeichnet durch** die Kombination mit einem Verfahren und Computer-Programm zum automatischen Erstellen von technologischen Rezepten zur Wärmebehandlung von metallischen Werkstücken in einem Ofen (1) mittels
- Werte für einen Werkstoff eines jeweiligen Werkstücks, Angaben zu Wärmebehandlungsverfahren und von technischen Angaben des jeweiligen Ofens (1),
- einer stufenweisen Vorgabe oder Generierung von vorkalkulierbaren Parametern für die Wärmebehandlung des Werkstücks,
- eines ein Wärmebehandlungsprogramm generierenden Computers mit Datenbanken und einer programmgemäßen Speicherung eines generierten Wärmebehandlungsprogramms sowie den Abruf zur Aktivierung der Wärmebehandlung im Ofen (1), bei dem
a) in einem ersten Programmschritt eine Werkstoffgruppe und der Werkstoff ausgewählt und in Abhängigkeit vom ausgewählten Werkstoff ein Wärmebehandlungsverfahren bestimmt wird,
b) in einem zweiten Programmschritt Daten des Werkstücks Charge wie eine Wandstärke eingegeben, eine Vergleichsgeometrie ausgewählt, ein Chargengewicht eingegeben und ein Chargenaufbau ausgewählt werden und daraus automatisch eine virtuelle Wandstärke berechnet wird,
c) in einem dritten Programmschritt aus der virtuellen Wandstärke zusammen mit den Daten der Charge und den verfügbaren Parametern des Ofens (1) eine vom Werkstoff abhängige und ggf. manuell veränderbare Aufheiz- und Abschreckcharakteristik integriert werden und
d) in einem vierten Programmschritt zuerst Daten von dem gewählten Material zu Behandlungsparametern und Daten von dem gewählten Wärmebehandlungsverfahren zu einer Rezeptstrukturvorlage geladen werden und aus der Rezeptstrukturvorlage unter Verwendung der Daten aus einer Benutzerschnittstelle, wie Aufheizcharakteristik und Abschreckcharakteristik sowie erforderlichenfalls eine Sollhärte zu einer Rezeptstruktur zusammengestellt werden, woraus Werte von Rezeptursegmenten, wie Segmentdauern, Temperaturen, Rampensteigungen und/oder Temperaturrampen und Drücke festgelegt werden und dann im Ergebnis des vierten Programmschritts ein technologisches Wärmebehandlungsrezept automatisch generiert wird, welches nacharbeitbar, in einer Programmdatenbank speicherbar sowie für die Wärmebehandlung von metallischen Werkstücken zum Industrieofen (5) abrufbar ist, wobei
e) in der Programmdatenbank in dem Arbeitsschritt (IV) ein Wärmebehandlungsprogramm (7) ausgewählt wird, das einer Charge (4) zugeordnet wird, die dann in einem Arbeitsschritt (V) oder Arbeitsschritt (XIII) als Mustercharge (4) definiert wird, und
f) nach Abschluss der Wärmebehandlung dieser Mustercharge (4) automatisch ein zu dieser Mustercharge (4) gehörendes Musterprogramm (5) mit expliziten Programmsegmentdauern generiert wird, welches wiederum in der Programmdatenbank abgelegt wird.

7. Verfahren und Computer-Programm nach einem der Ansprüche 1 bis 6, **gekennzeichnet durch** die Verwendung einer Benutzeroberfläche zur Erstellung der Mustercharge (4), in der die Option "als Mustercharge definieren" angewählt wird.

8. Verfahren und Computer-Programm zur Steuerung der Wärmebehandlung von metallischen Werkstücken nach einem der Ansprüche 1 bis 6, **gekennzeichnet durch** die Verwendung einer Benutzeroberfläche zur Erstellung der Mustercharge (4), in der die Option "Mustercharge" angewählt wird, um die Charge (4) als Mustercharge (4) zu definieren.

9. Verfahren und Computer-Programm nach einem der Ansprüche 1 bis 6, **gekennzeichnet durch** die Verwendung einer Benutzeroberfläche mittels der aus der Auswahlliste für später zu fahrende Chargen (6) auf eine bereits eingegebene
Mustercharge (4) zurückgegriffen wird und bei einer solchen Zuordnung der Charge (6) zu einer Mustercharge (4) anstelle des ursprünglichen Behandlungsprogramms wie Wärmebehandlungsprogramm (7) automatisch das modifizierte Programm wie Musterprogramm (5) der Mustercharge (4) zugeordnet wird, das die tatsächlich gefahrenen Zeiten der Mustercharge (4) als Segmentdauer verwendet, wobei nach Senden des Behandlungsprogramms (7) an die SPS (2) zu einem Arbeitsschritt (VII) die neue Charge (6) den gleichen Zyklus wie die zugeordnete Mustercharge (4) durchläuft.
